# EUROPÄISCHE PATENTANMELDUNG

(11) **EP 2 416 173 A2**
(43) Veröffentlichungstag der Anmeldung: **08.02.2012**
(21) Anmeldenummer: 11006365.8
(22) Anmeldetag: 03.08.2011
(51) Int. Cl.: G01S 13/88

(54) **Linearantrieb**

(30) Priorität: 04.08.2010 DE 102010033369
(71) Anmelder: FESTO AG & Co. KG, 73734 Esslingen (DE)
(72) Erfinder: Reininger, Thomas, Dr., 73249 Wernau (DE); Maier, Marcus, Dr., 73760 Ostfildern (DE); Geisbusch, Lothar, Dr., 73760 Ostfildern (DE); Bretz, Christian, 73732 Esslingen (DE); von Zeppelin, Matthias, 73669 Lichtenwald (DE); Steltner, Holger, Dr., 73728 Esslingen (DE)
(74) Vertreter: Kocher, Mark Werner

(57) **Zusammenfassung**

Die Erfindung betrifft einen Linearantrieb mit einem Antriebsgehäuse (2; 102) und einem darin axialbeweglich aufgenommenen Stellglied (3; 103) sowie mit einer Mikrowellenpositionsmesseinrichtung (8; 108) zur Bestimmung der Position des Stellglieds (3; 103), die einen Antennenkörper (22; 122), eine Koppelsonde(25; 125) sowie eine Speise- und Auswerteschaltung (28; 128) umfasst und die zur Bereitstellung von Mikrowellen in einen vom Antriebsgehäuse (2; 102) und vom Stellglied (3; 103) begrenzten Hohlleiter (16; 116) sowie zur Detektion von Mikrowellen ausgebildet ist. Erfindungsgemäß ist vorgesehen, dass an einer Stirnfläche (180; 181) des Stellglieds (103) und/oder an einer dem Stellglied (103) gegenüberliegenden Stirnfläche (188, 196) Absorptionsmittel (70; 180, 181, 185, 191) angebracht sind, die für eine elektrische und/oder eine magnetische Dämpfungswirkung für Mikrowellen ausgebildet sind und die zwischen zwei polygonförmigen Hüllkurven (211, 212; 221, 222; 231, 232) und/oder im Nutgrund einer nutförmigen Ausnehmung (67, 68) angeordnet sind.

## Beschreibung

Die Erfindung betrifft einen Linearantrieb mit einem Antriebsgehäuse und einem im Antriebsgehäuse axialbeweglich längs einer Bewegungsachse aufgenommenen Stellglied sowie mit einer Mikrowellenpositionsmesseinrichtung zum Aussenden und Empfangen von Mikrowellen zur Bestimmung der Position des Stellglieds im Antriebsgehäuse, die einen im Antriebsgehäuse angeordneten Antennenkörper, eine Koppelsonde sowie eine Speise- und Auswerteschaltung umfasst und die zur Bereitstellung von Mikrowellen in einen vom Antriebsgehäuse und vom Stellglied begrenzten Hohlleiter sowie zur Detektion von am Stellglied reflektierten Mikrowellen ausgebildet ist.

Die US 4,757,745 offenbart ein elektrohydraulisches System mit einem Aktor, einem Servoventil und einer Steuerungseinrichtung. Im Aktor ist eine Mikrowellenpositionsmesseinrichtung angeordnet, die ein Antennenpaar umfasst. Eine Auswertung der vom Antennenpaar empfangenen Mikrowellen wird mit Hilfe eines Phasendetektors vorgenommen, um dadurch die Position eines Kolbens des Aktors gegenüber einem umgebenden Zylinder zu ermitteln. Am einem dem Kolben gegenüberliegenden Ende des Zylinders ist eine Dämpfungsscheibe für Mikrowellen angeordnet, die vermeiden soll, dass an diesem Ende reflektierte Mikrowellen die Messung durch die beiden Antennen des Antennenpaars stören.

Aus der DE 10 2008 061 104 A1 ist ein Linearantrieb mit einem Stellglied, das in einem Bewegungsraum eines Antriebsgehäuses axialbeweglich längs einer Bewegungsachse aufgenommen ist, bekannt. Weiterhin ist dem Linearantrieb eine Mikrowellenpositionssensoranordnung zugeordnet, die endseitig am Antriebsgehäuse angeordnet ist und die eine Koppelsonde zum Aussenden und Empfangen von Mikrowellen zur Bestimmung der Position des Stellglieds im Bewegungsraum umfasst.

Die Aufgabe der Erfindung besteht darin, einen Linearantrieb mit verbesserter Mikrowellenpositionsmesseinrichtung bereitzustellen.

Diese Aufgabe wird für einen Linearantrieb der eingangs genannten Art mit den Merkmalen des Anspruches 1 gelöst. Hierbei ist vorgesehen, dass an wenigstens einer Stirnfläche des Stellglieds und/oder an wenigstens einer dem Stellglied gegenüberliegenden Stirnfläche, insbesondere des Antennenkörpers und/oder des Antriebsgehäuses, Absorptionsmittel angebracht sind, die für eine elektrische und/oder eine magnetische Dämpfungswirkung für Mikrowellen, insbesondere zur Dämpfung von Mikrowellen des Typs H11 und/oder des Typs H21 und/oder des Typs TEM, ausgebildet sind und die zwischen zwei polygonförmigen Hüllkurven und/oder im Nutgrund einer nutförmigen Ausnehmung angeordnet sind.

Die sich gegenüberliegenden Stirnflächen des Antennenkörpers und des Stellglieds sowie die sich gegenüberliegenden Stirnflächen des Stellglieds und des Antriebsgehäuses bilden angesichts der sich im Wesentlichen längs der Bewegungsachse ausbreitenden Mikrowellen die Hauptreflexionsflächen für diese Mikrowellen. Somit ist eine Anordnung der Absorptionsmittel an wenigstens einer dieser Stirnflächen für die Absorption der magnetischen und/oder elektrischen Wellenanteile von unerwünschten Mikrowellen besonders effizient. Dies gilt insbesondere dann, wenn die jeweilige Stirnfläche zumindest im Wesentlichen senkrecht zur Bewegungsachse und damit zur Ausbreitungsrichtung der Mikrowellen ausgerichtet ist.

Bei Mikrowellenpositionsmesseinrichtungen treten insbesondere aufgrund von geometrischen Unzulänglichkeiten der Mikrowellenpositionsmesseinrichtung Mikrowellen unerwünschter Wellentypen auf. Diese Unzulänglichkeiten liegen beispielsweise in der Gestaltung der Koppelsonde und/oder des Antennenkörpers und/oder des Antriebsgehäuses und/oder des Stellglieds, da deren präzise Fertigung mit engen Toleranzen kostenintensiv ist. Beispielsweise können die auch als Wellentypwandler bezeichnete Koppelsonde und der damit gekoppelte Antennenkörper aufgrund von geometrischen Abweichungen gegenüber einer Idealform unerwünschte Wellentypen aussenden. Unerwünschte Mikrowellen können auch aufgrund von Unzulänglichkeiten der Speise- und Auswerteschaltung auftreten und können im Hohlleiter zwischen Antennenkörper und Stellglied gegebenenfalls ausbreitungsfähig sein sowie unerwünschte Resonanzen hervorrufen. Auftretende Resonanzen unerwünschter Mikrowellen haben einen negativen Einfluss auf das Messergebnis und beeinflussen somit auf die Positionsbestimmung für das Stellglied in negativer Weise. Erfindungsgemäß wird eine Absorption dieser Mikrowellen durch geeignete Absorptionsmittel angestrebt.

Unerwünschte Mikrowellen und damit einhergehende störende Resonanzen können auch aufgrund von Mikrowellen auftreten, die einen zwischen dem Antriebgehäuse und dem beweglich im Antriebsgehäuse aufgenommenen Stellglied ausgebildeten Lagerspalt durchdringen und in einen zweiten Bewegungsraum eindringen, der der Mikrowellenpositionsmesseinrichtung abgewandt ist. Ein Teil dieser Mikrowellen durchdringt nach Reflexion an einer Oberfläche des zweiten Bewegungsraums gegebenenfalls erneut den Lagerspalt und tritt nunmehr in den ersten Bewegungsraum, der insbesondere zwischen Antennenkörper und Stellglied ausgebildet ist, ein. Hierdurch kann es zu Störungen des Messvorgangs kommen. Dies ist insbesondere dann der Fall, wenn das beispielsweise als Kolben ausgeführte Stellglied nicht in elektrischem Kontakt, insbesondere in flächigem Umfangskontakt, mit dem Antriebsgehäuse steht. Dies ist beispielsweise der Fall, wenn der aus Metall hergestellte Kolben mit dem Antriebsgehäuses einen umlaufenden Lagerspalt ausbildet, der von einer umlaufenden Dichtung aus einem elastischen Material verschlossen wird, die abdichtend an einer Innenoberfläche des exemplarisch aus elektrisch leitendem Material hergestellten Antriebsgehäuses anliegt, um zwei von Kolben und Antriebsgehäuse voneinander abgetrennte Bewegungsräume abzudichten.

Durch die Integration wenigstens eines Absorptionsmittels in den Linearantrieb werden derartige Resonanzeffekte reduziert, so dass dadurch die Messgenauigkeit der Mikrowellenpositionsmesseinrichtung erhöht werden kann. Die Absorptionsmittel sind dazu eingerichtet, die Energie der unerwünschten Mikrowellen zumindest überwiegend, vorzugsweise zumindest nahezu vollständig, in Wärme umzusetzen. Als zu bedämpfende Wellentypen kommen insbesondere der H11-Wellentyp und der H21-Wellentyp (auch als TE21-Wellentyp bezeichnet) in Frage, die ohne das Vorhandensein der Absorptionsmittel die erwünschte E01-Wellen beeinträchtigen und somit das Messergebnis negativ beeinflussen. Im zweiten Bewegungsraum, der der Mikrowellenpositionsmesseinrichtung abgewandt ist, kann insbesondere der TEM-Mode als unerwünschter Wellentyp auftreten. Dabei stellt beispielsweise eine dem Stellglied zugehörige Kolbenstange den Innenleiter einer Koaxialleitung dar. Besonders vorteilhaft ist es, wenn die Absorptionsmittel eine zumindest nahezu vollständige Absorption der unerwünschten Wellentypen gewährleisten, während der zur Messung der Position des Stellglieds eingesetzte Wellentyp (typischerweise der E01-Wellentyp) beispielsweise an der Stirnfläche des Stellglieds zumindest nahezu verlustfrei reflektiert wird.

Durch die Anordnung der Absorptionsmittel in einen Zwischenraum zwischen zwei polygonförmigen Hüllkurven kann ein vorteilhafter Kompromiss zwischen der Menge des einzusetzenden Absorptionsmaterials und der gewünschten Absorptionswirkung erreicht werden. Durch eine Anordnung von Absorptionsmitteln im Nutgrund einer nutförmigen Ausnehmung können insbesondere Oberflächenströme an der Oberfläche des Antennenkörpers wirksam bedämpft werden, beispielsweise um unerwünschte H11-Mikrowellen zu reduzieren.

Vorteilhafte Weiterbildungen der Erfindung sind in den Unteransprüchen angegeben.

Zweckmäßig ist es, wenn die Absorptionsmittel einen ferritischen.Materialanteil enthalten, der für eine Dämpfung von magnetischen Anteilen der Mikrowellen, insbesondere von Oberflächenströmen, ausgebildet ist. Ferritische Materialien sind elektrisch schlecht oder nicht leitend und dienen zur Absorption des magnetischen Wellenanteils der unerwünschten Mikrowellen. Bei den ferritischen Materialien kann es sich beispielsweise um ferromagnetische, keramische Werkstoffe aus Eisenoxid, beispielsweise Hämatit (Fe203) oder Magnetit (Fe304) handeln, gegebenenfalls mit weiteren Zusätzen wie insbesondere Nickel, Zink, Mangan, Barium und Strontium.

Bei einer Weiterbildung der Erfindung ist vorgesehen, dass die Absorptionsmittel elektrische Widerstandsmittel, insbesondere aus ausgehärteter Widerstandspaste, umfassen, die für eine Dämpfung elektrischer Feldstärkekomponenten unerwünschter Mikrowellen in einem Bewegungsraum für das Stellglied ausgebildet sind. Beispielsweise ist die elektrische Feldstärke des H11-Wellentyps senkrecht zur Ausbreitungsrichtung der Mikrowelle und somit zumindest im Wesentlichen parallel zu den Stirnflächen des Stellglieds, des Antennenkörpers und eines Abschlussdeckels des Antriebsgehäuses ausgerichtet. Für eine Bedämpfung der elektrischen Feldkomponente der unerwünschten Mikrowellen muss dementsprechend senkrecht zur Ausbreitungsrichtung der unerwünschten Mikrowellen, insbesondere in einer Radialrichtung orthogonal zur Bewegungsachse des Linearantriebs, ein elektrischer Widerstand angeordnet sein, der zumindest einen Teil der elektrischen Energie in Wärme umwandelt. Anordnung und elektrischer Widerstand des elektrischen Widerstandsmittels sind auf den zu bedämpfenden Wellentyp anzupassen, beispielsweise im Rahmen einer numerischen Simulation. Dabei ist zu berücksichtigen, dass der erwünschte Mikrowellentyp, beispielsweise die E01-Mikrowelle, nicht oder nur in geringem Maße bedämpft wird. Ziel der Anordnung der elektrischen Widerstandsmittel ist es, diese im Feldstärkemaximum der elektrischen Feldstärke der unerwünschten Mikrowellen anzuordnen. Dieses befindet sich in etwa im Abstand einer Viertelwellenlänge vor einer Stirnfläche aus elektrisch leitendem Material. Somit ist es besonders vorteilhaft, wenn die elektrischen Widerstandsmittel mit einer derartigen Beabstandung, beispielsweise durch Verwendung einer elektrisch isolierenden Trägerschicht, der jeweiligen Stirnfläche zugeordnet werden. Die beispielsweise als Widerstandspaste ausgeführten Widerstandsmittel können in einem Druck- oder Dosierverfahren, beispielsweise im Tampondruck oder durch einen Aufspritzvorgang, als zunächst gestaltlose Masse auf die entsprechende Oberfläche aufgetragen und anschließend ausgehärtet werden.

Bevorzugt sind die Widerstandsmittel als Anordnung von einzelnen oder elektrisch miteinander gekoppelten, diskreten elektrischen Widerständen ausgebildet. Die Widerstandsmittel können beispielsweise unter Verwendung von oberflächenmontierbaren Widerständen (surface mount devices - SMD-Widerständen) und einer mit elektrischen Leiterbahnen und Kontaktflächen versehenen Trägerfolie verwirklicht werden. Die Widerstände werden mit den Kontaktflächen der Trägerfolie und damit mit den darauf aufgebrachten elektrischen Leiterbahnen elektrisch leitend verbunden und gegebenenfalls durch die Leiterbahnen untereinander elektrisch gekoppelt. Die Trägerfolie, die abseits der elektrischen Leiterbahnen und Kontaktflächen aus isolierendem Material hergestellt ist, wird ihrerseits an der entsprechenden Stirnfläche angebracht, insbesondere angeklebt. Die elektrischen Leiterbahnen dienen dabei als Antennenarme eines Dipols, der die Mikrowellen zumindest nahezu verlustfrei weiterleitet und in dessen Zentrum der jeweilige Widerstand als Absorptionsmittel angeordnet ist. Vorzugsweise sind die Leiterbahnen im Wesentlichen kreisringsegmentförmig ausgebildet und der jeweilige Widerstand verbindet jeweils zwei, vorzugsweise spiegelbildlich ausgeführte, Kreisringsegmente.

Bei einer Weiterbildung der Erfindung sind die Absorptionsmittel zwischen zwei ringförmigen Hüllkurven, insbesondere zwischen zwei kreisringförmigen Hüllkurven, angeordnet. Hierdurch wird eine vorteilhafte Integration der Absorptionsmittel in das typischerweise zylindrisch ausgebildete Antriebsgehäuse und/oder an dem typischerweise zylindrisch ausgebildeten Stellglied ermöglicht. Der von den Hüllkurven bestimmte ringförmige Bereich, in dem die Absorptionsmittel angeordnet sind, kann insbesondere polygonal oder oval oder kreisförmig ausgebildet sein.

In weiterer Ausgestaltung der Erfindung sind die Absorptionsmittel innerhalb der Hüllkurve segmentiert ausgebildet, so dass in Umfangsrichtung der Hüllkurve und/oder in radialer Richtung der Hüllkurve zwischen Bereichen, die mit Absorptionsmitteln versehen sind auch Bereiche frei von Absorptionsmitteln vorliegen. Die Segmentierung kann dazu dienen, einen kostengünstigen Aufbau der Absorptionsmittel zu gewährleisten, wenn diese beispielsweise aus plattenförmigen Elementen oder aus diskreten Bauelementen wie beispielsweise SMD-Widerständen gebildet sind. Zudem können in den Bereichen des Antriebsgehäuses und/oder des Stellglieds, in denen die Absorptionsmittel vorgesehen werden sollen, mechanische Strukturen vorliegen, die eine bereichsweise Segmentierung der Absorptionsmittel erfordern.

Vorteilhaft ist es, wenn die Absorptionsmittel als, insbesondere geschlossener, Ring, vorzugsweise als Kreisring, insbesondere aus einer gestaltlosen Masse geformt, ausgebildet sind. Hierdurch wird eine vorteilhafte Absorptionswirkung für die gegebenenfalls in unterschiedlichen Raumrichtungen polarisierten, unerwünschten Mikrowellen sichergestellt und außerdem wird die geometrische Symmetrie der mechanischen Komponenten des Linearantriebs für die erwünschte Mikrowelle nicht gestört. Aufgrund der Ringstruktur liegt der jeweils zu absorbierenden Feldkomponente stets ein vorteilhaft ausgerichteter Bereich der Absorptionsmittel gegenüber. Dies gilt insbesondere dann, wenn der, insbesondere geschlossene, Ring als Kreisring ausgebildet ist. Besonders bevorzugt sind die Absorptionsmittel, die als elektrische Widerstandsmittel und/oder als magnetische Absorptionsmittel ausgebildet sein können, aus einer gestaltlosen Masse geformt. Dies ermöglicht eine kostengünstige Herstellweise für die Widerstandsmittel, die beispielsweise in einem Druckverfahren, insbesondere im Siebdruck- oder Tampondruckverfahren auf die jeweilige Stirnfläche aufgebracht werden können. Die gestaltlose Masse kann beispielsweise ein mit Ferritpartikeln versetztes, aushärtbares Bindemittel auf Kunststoffbasis sein, das vor dem Aushärtevorgang eine pastöse Konsistenz aufweist und nach dem Aushärtevorgang gestaltfest ist.

Bei einer vorteilhaften Ausgestaltung der Erfindung ist vorgesehen, dass die Absorptionsmittel auf einer elektrisch isolierenden Oberfläche, insbesondere mit einer Beabstandung von in etwa 25 Prozent der von der Speise- und Auswerteschaltung bereitgestellten Mikrowellenwellenlänge von einer elektrisch leitenden Oberfläche, angeordnet sind. Hierdurch wird ein hoher Wirkungsgrad für die Absorptionswirkung der Widerstandsmittel gewährleistet, da im Abstand einer Viertelwellenlänge der Mikrowellenwellenlänge vor einer metallischen Oberfläche ein Feldstärkemaximum der elektrischen Feldstärke der Mikrowelle vorliegt.

Zweckmäßig ist es, wenn die Absorptionsmittel in einem radial innenliegenden Bereich des Stellglieds, insbesondere benachbart zur Kolbenmutter oder Kolbenstange, angeordnet sind. Hierdurch wird aufgrund des geringen Durchmessers der ringförmig ausgebildeten Absorptionsmittel die notwendige Menge an Absorptionsmittel, die zur Bildung einer geschlossenen Ringstruktur und damit zur Gewährleistung einer Absorptionswirkung erforderlich ist, gering gehalten. Zudem kann hierdurch ein möglichst geringer Einfluss auf die Ausbreitung von gewünschten Mikrowellen sichergestellt werden.

Vorzugsweise sind an dem Antennenkörper an einer zweiten, dem Stellglied gegenüberliegenden Stirnfläche eine erste und eine zweite jeweils nutförmige Ausnehmung ausgebildet, die einen Winkel miteinander einschließen, insbesondere kreuzförmig zueinander angeordnet sind. Die Aufgabe der nutförmigen Ausnehmungen besteht darin, eine Dämpfung von unerwünschten H11-Mikrowellen zu unterstützen, die mit unterschiedlichen Polarisationen auftreten können. Vorteilhaft ist es, wenn sich die Ausnehmungen schneiden.

Vorteilhaft ist es, wenn die erste nutförmige Ausnehmung, deren Nutflanken vorzugsweise quer zu den Seitenflächen des zweiten Speisehohlleiterabschnitts ausgerichtet sind, eine andere, insbesondere größere, Nuttiefe t2 als die zweite nutförmige Ausnehmung aufweist. Hierdurch werden Dämpfungseffekte für die Mikrowellen ausgeglichen, die in Zusammenhang mit den Ausmündungen der Speisehohlleiter in den Ringspalt zusammenhängen.

Bevorzugt ist im Nutgrund der ersten und/oder der zweiten nutförmigen Ausnehmung ein, vorzugsweise magnetisch wirksames, Absorptionsmittel, insbesondere ein ferritisches Absorbermaterial, angeordnet. Die Aufgabe des Absorbermaterials besteht darin, diejenigen an der Oberfläche des Antennenkörpers auftretenden Oberflächenströme, die von den unerwünschten H11-Mikrowellen hervorgerufen werden, wirkungsvoll zu absorbieren, um die gewünschte Dämpfungswirkung für diese Mikrowellen zu gewährleisten.

Eine vorteilhafte Ausführungsform der Erfindung ist in der Zeichnung dargestellt. Hierbei zeigt:
Figur 1: eine Schnittdarstellung eines Linearantriebs mit einer integrierten Mikrowellenpositionsmesseinrichtung,
Figur 2: eine erste perspektivische Darstellung des Antennenkörpers der Mikrowellenpositionsmesseinrichtung,
Figur 3: eine zweite perspektivische Darstellung des Antennenkörpers,
Figur 4: eine perspektivische Darstellung einer die wesentlichen Komponenten der Mikrowellenpositionsmesseinrichtung enthaltenden Baugruppe,
Figur 5: eine Schnittdarstellung einer zweiten Ausführungsform eines Linearantriebs mit einer integrierten Mikrowellenpositionsmesseinrichtung,
Figur 6: eine Darstellung eines elektrisch wirksamen Absorptionsmittels aus dem Linearantrieb gemäß der zweiten Ausführungsform,
Figur 7: eine erste perspektivische Darstellung des Stellglieds aus der zweiten Ausführungsform des Linearantriebs,
Figur 8: eine zweite perspektivische Darstellung des Stellglieds aus der zweiten Ausführungsform des Linearantriebs,
Figur 9: eine Darstellung einer weiteren Ausführungsform eines Absorptionsmittels,
Figur 10: eine Darstellung einer weiteren Ausführungsform eines Absorptionsmittels und
Figur 11: eine Darstellung einer weiteren Ausführungsform eines Absorptionsmittels.

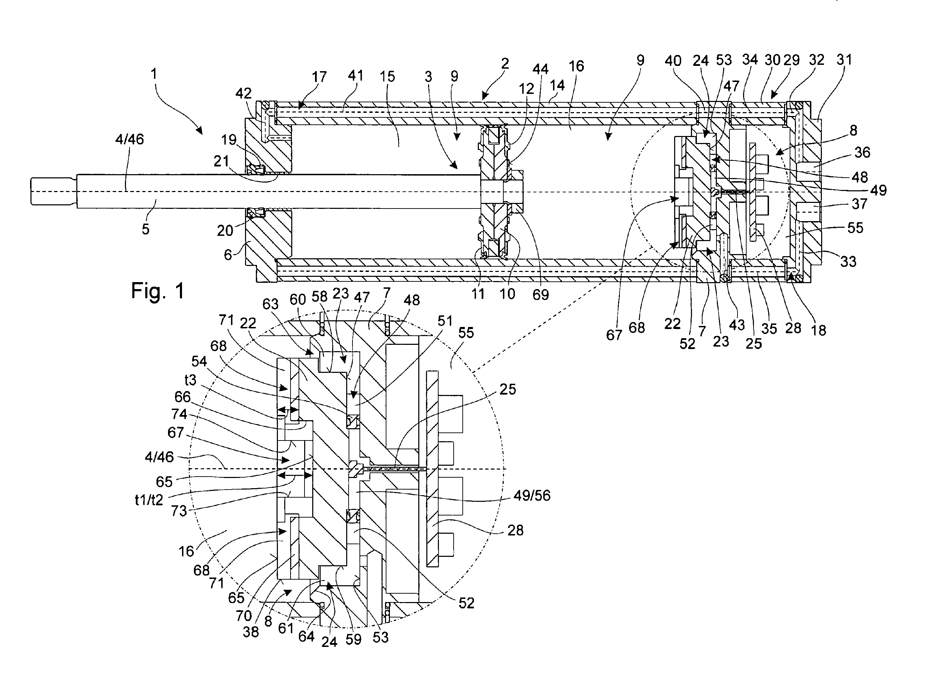

In der Figur 1 ist ein Linearantrieb 1 dargestellt, bei dem es sich exemplarisch um einen fluidisch betreibbaren, doppeltwirkenden Zylinder handelt. Der Linearantrieb 1 umfasst ein aus nachstehend näher beschriebenen Einzelkomponenten aufgebautes Antriebsgehäuse 2, in dem ein Stellglied 3 längs einer Bewegungsachse 4 linearbeweglich aufgenommen ist. An einem ersten Endbereich des Antriebsgehäuses 2 durchsetzt eine dem Stellglied 3 zugehörige Kolbenstange 5 einen stirnseitig am Antriebsgehäuse 2 angebrachten Abschlussdeckel 6. An einem entgegengesetzten Endbereich des Antriebsgehäuses 2 ist ein weiterer Abschlussdeckel 7 vorgesehen, dem einige nachstehend näher beschriebene Komponenten einer Mikrowellenpositionsmesseinrichtung 8 zugeordnet sind.

Zwischen den beiden Abschlussdeckeln 6, 7 erstreckt sich in einem Zylinderrohr 14 ein Bewegungsraum 9, in dem ein dem Stellglied 3 zugehöriger und mit der Kolbenstange 5 verbundener Kolben 10 linearverschieblich aufgenommen ist. Der Kolben 10 weist in einem radial außenliegenden Bereich an einander entgegengesetzten Stirnflächen angebrachte, jeweils ringförmig umlaufende Dichteinrichtungen 11, 12 auf. Damit trennt der Kolben 10 den Bewegungsraum 9 in eine erste Arbeitskammer 15 und in eine zweite Arbeitskammer 16 auf. Die beiden Arbeitskammern 15, 16 sind somit fluidisch getrennt voneinander ausgebildet und können über jeweils zugeordnete Versorgungskanäle 17, 18 mit druckbeaufschlagtem Fluid, insbesondere Druckluft, beaufschlagt werden.

In einer zur Durchführung der Kolbenstange 5 vorgesehenen Ausnehmung 19 im ersten Abschlussdeckel 6 sind eine umlaufende Dichteinrichtung 20 sowie eine Führungsbuchse 21 angeordnet, die jeweils zur flächigen Anlage auf der Außenoberfläche der Kolbenstange 5 vorgesehen sind. Die Dichteinrichtung 20 stellt eine Abdichtung der ersten Arbeitskammer 15 gegenüber der Umgebung sicher, die Führungsbuchse 21 gewährleistet eine Linearführung der Kolbenstange 5.

An dem zweiten Abschlussdeckel 7, der aus einem wenigstens oberflächlich elektrisch leitenden Material, insbesondere Metall, hergestellt ist, ist ein der Mikrowellenpositionsmesseinrichtung 8 zugehöriger Antennenkörper 22 angebracht, der zusammen mit dem Abschlussdeckel 7 einen ersten und einen zweiten Speisehohlleiter 23, 24 begrenzt, wie dies insbesondere in der Ausschnittvergrößerung der Figur 1 ersichtlich ist. Ausgehend vom Antennenkörper 22 erstreckt sich eine Koppelsonde 25 in eine dem Stellglied 3 entgegengesetzte Richtung längs der Bewegungsachse 4. Die Koppelsonde 25 durchsetzt kontaktlos den zweiten Abschlussdeckel 7 und ist mit einer Ansteuerschaltung 28 verbunden. Zur Kapselung der Ansteuerschaltung 28 gegenüber Umwelteinflüssen wie Feuchtigkeitsangriff oder elektromagnetischer Störeinstrahlung ist endseitig an das Antriebsgehäuse 2 ein Messgehäuse 29 angebracht, das einen ringformförmigen Messgehäuseabschnitt 30 sowie einen Abschlussdeckel 31 umfasst. Exemplarisch sind sowohl der Abschlussdeckel 31 als auch der Messgehäuseabschnitt 30 jeweils von Fluidkanalabschnitten 32, 33, 34, 35 durchsetzt. Die Fluidkanalabschnitte 32 und 33 münden in jeweils stirnseitig am Abschlussdeckel 31 vorgesehene Anschlussöffnungen 36, 37 aus.

Der Fluidkanalabschnitt 34 ist kommunizierend mit einem den Abschlussdeckel 7 durchsetzenden Fluidkanalabschnitt 40 und dadurch mit einem das Zylinderrohr 14 durchsetzenden Fluidkanalabschnitt 41 kommunizierend verbunden. Dieser ist seinerseits mit einem im ersten Abschlussdeckel 6 ausgebildeten Fluidkanalabschnitt 42 verbunden, um die erste Arbeitskammer 15 des Linearantriebs 1 mit druckbeaufschlagtem Fluid versorgen zu können. Der Fluidkanalabschnitt 35 steht über einen im zweiten Abschlussdeckel 7 ausgebildeten Fluidkanal 43 in kommunizierender Verbindung mit der zweiten Arbeitskammer 16 und ermöglicht damit die Druckbeaufschlagung dieser Arbeitskammer 16.

Auf der Ansteuerschaltung 28 sind ein nicht näher bezeichneter Hochfrequenzgenerator sowie eine ebenfalls nicht näher bezeichnete Auswerteschaltung für Mikrowellen aufgebaut. Der Hochfrequenzgenerator dient zur Erzeugung eines hochfrequenten elektrischen Signals, das als Mikrowelle über die Koppelsonde 25 in die beiden Speisehohlleiter 23 und 24 ausgekoppelt wird und sich von dort in die zweite Arbeitskammer 16 ausbreiten kann. Dort wird ein erheblicher Anteil der ausgesendeten Mikrowellen an einer der Mikrowellenpositionsmesseinrichtung 8 zugewandten Oberfläche 44 des Kolbens 10 reflektiert und nach Durchlaufen der zweiten Arbeitskammer 16 in Richtung der Mikrowellenpositionsmesseinrichtung 8 zunächst in die Speisehohlleiter 23, 24 eingeleitet, um anschließend wieder in die Koppelsonde 25 eingekoppelt zu werden. In der Ansteuerschaltung 28 erfolgt dann zumindest indirekt eine Auswertung der Laufzeit der Mikrowellen, um die Position des Stellglieds 3 im Antriebsgehäuse 2 zu ermitteln.

Die nachstehend näher beschriebene Geometrie der Speisehohlleiter 23, 24 unterstützt die vorteilhafte Auskopplung der Mikrowellen von der Koppelsonde 25 in die zweite Arbeitskammer 16 sowie die nach Reflexion an der Oberfläche 44 des Kolbens 10 erfolgende Einkopplung der Mikrowellen in die Koppelsonde 25 zur Auswertung in der Ansteuerschaltung 28. Hierzu sind die beiden Speisehohlleiter 23, 24 jeweils spiegelsymmetrisch zur normal zur Darstellungsebene der Figur 1 ausgerichteten Spiegelebene ausgebildet. Dabei umfasst die Spiegelebene vorzugsweise die Mittelachse des exemplarisch rotationssymmetrisch ausgebildeten Antriebsgehäuses 2 und somit auch die Mittelachse 46 der ebenfalls beispielhaft rotationssymmetrisch ausgebildeten Koppelsonde 25.

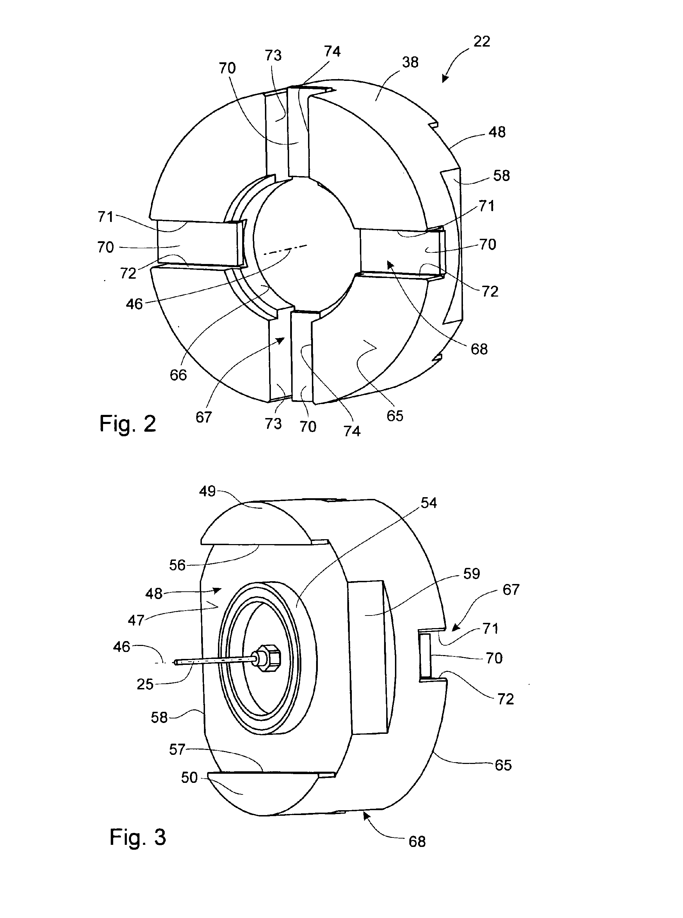

Der in den Figuren 1 bis 3 näher dargestellte, aus einem zumindest oberflächlich elektrisch leitenden Material, insbesondere Metall, hergestellte Antennenkörper 22 ist exemplarisch zylindrisch ausgebildet. Der Antennenkörper 22 weist verschiedene, nachstehend näher beschriebene Ausnehmungen auf, die unterschiedlichen Funktionen dienen. An einer dem zweiten Abschlussdeckel 7 zugewandten Stirnseite 47 des Antennenkörpers 22 ist beispielhaft eine, in der Figur 3 deutlich erkennbare, nutartige Vertiefung 48 vorgesehen. Dadurch ergeben sich ausgehend von der Stirnseite 47 in einander gegenüberliegenden, radial außenliegenden Bereichen des Antennenkörpers 22 Stege 49, 50. Die Stege 49, 50 ragen erhaben von Antennenkörper 22 ab und sind zur flächigen Anlage an einer dem Antennenkörper 22 zugewandten Stirnseite 53 des zweiten Abschlussdeckels 7 vorgesehen. Exemplarisch ist im Flächenzentrum der nutartigen Vertiefung 48 die Koppelsonde 25 mittels einer nicht näher dargestellten Schraubverbindung in den Antennenkörper 22 eingeschraubt.

Konzentrisch zur Koppelsonde 25 ist ein ringförmiges Dichtungselement 54 vorgesehen, das exemplarisch aus zwei zueinander konzentrischen Führungsringen und einem dazwischen aufgenommenen O-Ring ausgebildet ist und das zur abdichtenden Anlage an der Stirnseite 53 des zweiten Abschlussdeckels 7 sowie am exemplarisch eben ausgeführten Nutgrund der nutartigen Vertiefung 48 des Antennenkörpers 22 dient. Damit verhindert das Dichtungselement 54 ein Eindringen von Fluid und Verschmutzungen in den vom Messgehäuse 29 begrenzten Messraum 55. Exemplarisch sind die sich gegenüberliegenden Seitenflächen 56, 57 der Stege 49, 50 parallel zueinander ausgerichtet und äquidistant zur Mittelachse 46 der Koppelsonde 25 angeordnet. Die Stege 49 und 50 begrenzen zusammen mit den sich gegenüberliegenden Stirnseiten 47 und 53 erste Speisehohlleiterabschnitte 51, 52, die eine Ausbreitung von Mikrowellen in radialer Richtung von der und zu der Koppelsonde 25 unterstützen.

Exemplarisch sind an dem Antennenkörper 22 weiterhin zwei jeweils unmittelbar an den Nutgrund der nutartigen Vertiefung 48 anschließende, einander entgegengesetzte Planflächen 58, 59 ausgebildet, die beispielhaft parallel zueinander ausgerichtet sind. Diese Planflächen 58, 59 erstrecken sich ausgehend von der nutartigen Vertiefung 48 rechtwinklig zum Nutgrund über einen Teil der Längserstreckung des zylindrischen Umfangsbereichs 35 des Antennenkörpers 22 und bilden zusammen mit dem zweiten Abschlussdeckel 7 zweite Speisehohlleiterabschnitte 60, 61. Exemplarisch ist vorgesehen, dass der zweite Abschlussdeckel 7 eine der zweiten Arbeitskammer 16 zugewandte Vertiefung aufweist, die insbesondere bereichsweise napfartig ausgebildet ist. Somit werden durch die Anordnung des Antennenkörpers 22 am Abschlussdeckel 7 aufgrund der Planflächen 58, 59 die zwei spiegelbildlich zueinander angeordneten, zylinderabschnittsförmig ausgebildeten Speisehohlleiterabschnitte 60, 61 gebildet.

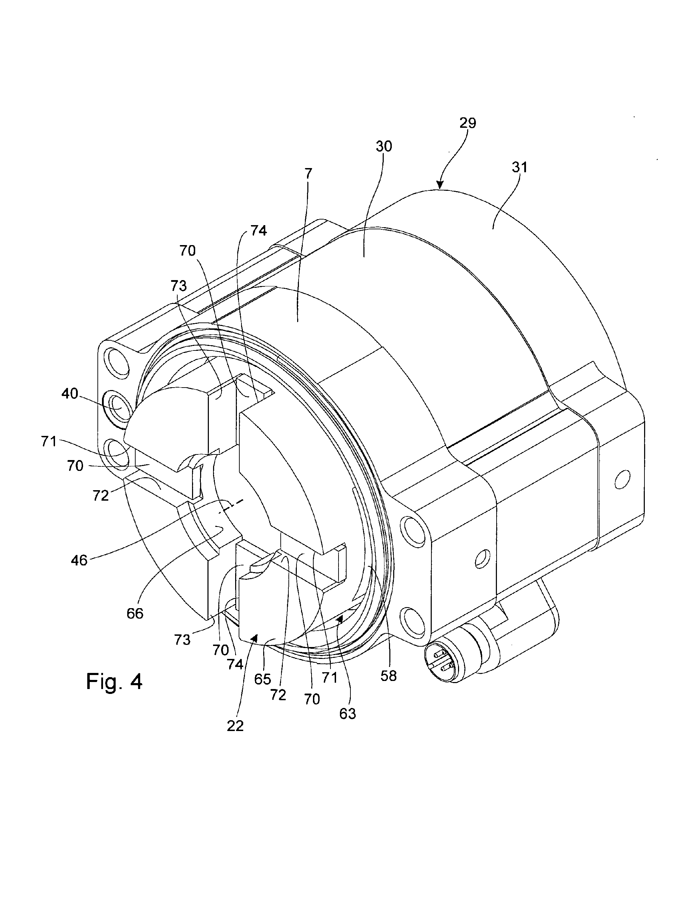

An den zylindrischen Abschnitt des Antennenkörpers 22 mit den Planflächen 58, 59 schließt sich ein weiterer zylindrischer Abschnitt 38 an, der im eingebauten Zustand des Antennenkörpers 22 im Linearantrieb 1 in Richtung des Stellglieds 3 orientiert ist. Dieser zylindrische Abschnitt 38 bildet zusammen mit der napfartigen Vertiefung im zweiten Abschlussdeckel 7 einen Ringspalt 63 aus, wie dies insbesondere aus den Figuren 1 und Figur 4 hervorgeht. Der Ringspalt 63 gewährleistet eine vorteilhafte Auskopplung der sich aus den Speisehohlleiterabschnitten 60, 61 in Richtung des Stellglieds 3 ausbreitenden Mikrowellen sowie eine vorteilhafte Einkopplung der aus der exemplarisch zylinderförmig ausgebildeten zweiten Arbeitskammer 16 in Richtung der Speisehohlleiterabschnitte 60, 61 einzukoppelnden Mikrowellen. Exemplarisch ist der zweite Abschlussdeckel 7 an einem dem Stellglied 3 zugewandten Endbereich konisch angefast, um die Aus- bzw. Einkopplung der Mikrowellen zu unterstützen. Das Querschnittsprofil des Ringspalts 63 wird somit durch den in diesem Bereich zylindrisch ausgebildeten Antennenkörper 22 und durch die kegelmantelabschnittsförmige Schrägfläche 64 am zweiten Abschlussdeckel 7 gebildet.

Exemplarisch ist der Antennenkörper 22 an seiner dem Stellglied 3 zugewandten Stirnfläche 65 mit Ausnehmungen 66, 67 und 68 versehen. Die zentrisch in die Stirnfläche 65 eingebrachte Ausnehmung 66 dient in einer nicht dargestellten Endlage des Linearantriebs mit nahezu vollständig eingezogener Kolbenstange 5 zur Aufnahme der an der Kolbenstange 5 angebrachten und der Befestigung des Kolbens 10 dienenden Befestigungsmutter 69. Die Ausnehmung 66 ist beispielsweise zylindrisch ausgebildet und weist bezogen auf die Stirnfläche 65 des Antennenkörpers 22 eine mit t1 bezeichnete Tiefe auf. Die Ausnehmungen 67, 68 an der Stirnfläche 65 sind jeweils nutartig ausgebildet und weisen jeweils einen exemplarisch ebenen Nutgrund auf. Ebenfalls weisen die Ausnehmungen 67, 68 exemplarisch einander gegenüberliegende, planparallele Seitenflächen 71, 72 auf. Beispielsweise ist die Ausnehmung 67 mit einer Tiefe t2 ausgeführt, die exemplarisch der Tiefe t1 für die erste Ausnehmung 66 entspricht. Die Ausnehmung 68 ist mit einer Tiefe t3 ausgeführt, die sich von der Tiefe t2 unterscheiden kann, also beispielsweise kleiner als die Tiefe t2 ist.

Im Nutgrund der Ausnehmungen 67 und 68 sind beispielsweise jeweils Absorptionsmittel 70 angeordnet, die vorzugsweise magnetisch wirksam sind. Mit Hilfe der Absorptionsmittel 70 soll eine Dämpfung eventuell vorhandener unerwünschter Resonanzen des H11-Grundmodes für die Mikrowellen erreicht werden, die einen störenden Einfluss auf das gewünschte Messergebnis der Mikrowellenpositionsmesseinrichtung haben könnten.

Der zu dämpfende H11-Grundmode oder Wellentyp weist zwei voneinander unabhängige Polarisationen, also Orientierungen des Vektors der elektrischen Feldstärke, auf. Durch die exemplarisch in Kreuzform senkrecht zueinander verlaufenden Ausnehmungen 67 und 68 ist sichergestellt, dass beliebige Polarisationen von Mikrowellen des H11-Grundmodes wirkungsvoll gedämpft werden. Demgegenüber werden die Mikrowellen des E01-Wellentyps aufgrund der kreuzschlitzartigen Anordnung der Absorber nicht oder nur geringfügig beeinträchtigt, da die Oberflächenströme, die der E01-Wellentyp im Sende- und Empfangsfall bewirkt, im Wesentlichen parallel zu den Schlitzkanten der Ausnehmungen 67, 68 und nicht senkrecht hierzu verlaufen. Durch die zumindest im Wesentlichen rechteckige Ausführung der Absorberstücke, die beispielsweise aus ferritischen Materialien hergestellt sein können, ergeben sich Vorteile in der Fertigung. Die Absorbermaterialien werden typischerweise in Matten- oder Plattenform bereitgestellt, so dass aufgrund der rechteckigen Form nur ein geringer Verschnitt in Kauf genommen werden muss.

Die unterschiedlichen Tiefen t2 und t3 für die Ausnehmungen 67 und 68 stehen in Zusammenhang mit dem Betriebsfrequenzbereich der Mikrowellenpositionsmesseinrichtung. Vorteilhaft sind die als Einschlitzungen ausgeführten Ausnehmungen 67 und 68 derart auf die Betriebsfrequenz angepasst, dass das Stück luftgefüllter Schlitz plus das Stück absorbergefüllter Schlitz eine stark verlustbehaftete, am Ende kurzgeschlossene Viertelwellenleitung für die unerwünschten H11-Wellen ergeben. Durch die Resonanzfähigkeit der Ausnehmungen 67, 68 bezüglich der unerwünschten Mikrowellen wird die Absorberwirkung erhöht. Die Tiefe t2 und t3 der Ausnehmungen 67 und 68 unterscheidet sich, da die Mikrowellen durch den zweiten Speisehohlleiterabschnitt 60, 61 benachbart zu der dritten Ausnehmung 68 austreten. Durch eine für jede Polarisation getrennte Anpassung der Schlitztiefe t2, t3 kann die Absorberwirkung optimiert bzw. die jeweilige Anpassung an den gewünschten Frequenzbereich erreicht werden.

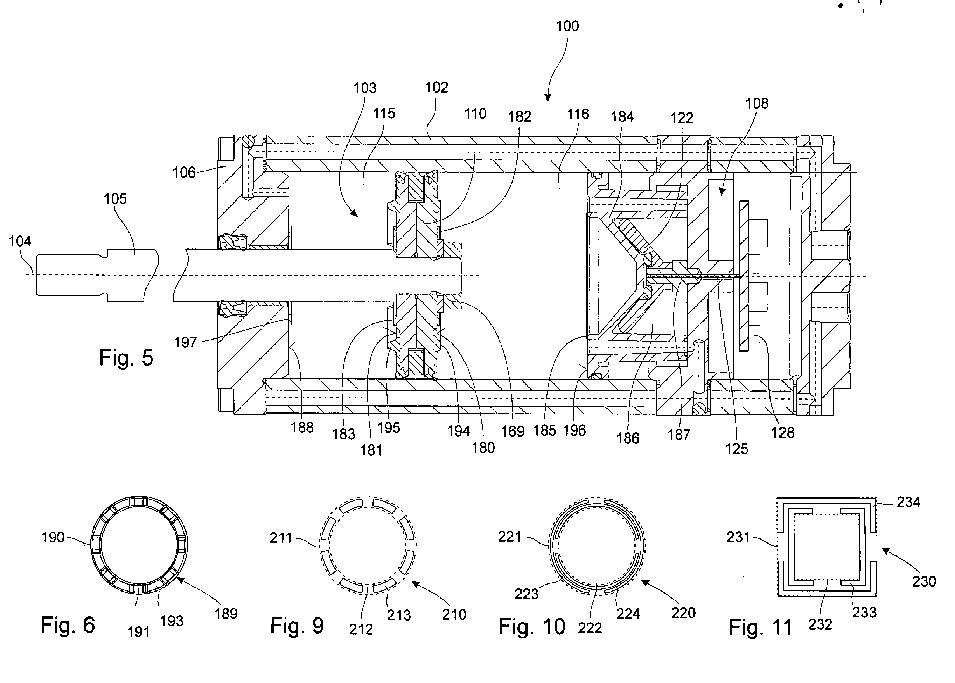

Eine zweite exemplarische Ausführungsform eines Linearantriebs 100 ist in den Figuren 5 bis 8 dargestellt. Da die Aufbauweise dieses Linearantriebs 100 in vielen Bereichen identisch oder ähnlich wie die Aufbauweise des Linearantriebs 1 gemäß den Figuren 1 bis 4 ist, werden nachstehend und in den Figuren nur diejenigen Bauteile beschrieben und bezeichnet, die für die Erfindung maßgeblich sind und die gegebenenfalls technisch abweichend ausgebildet sind.

Wie beim Linearantrieb 1 ist auch beim Linearantrieb 100 exemplarisch die Mikrowellenpositionsmesseinrichtung 108 an demjenigen Endbereich des Antriebsgehäuses 102 angeordnet, der nicht von der Kolbenstange 105 durchsetzt ist. Das im Linearantrieb 100 vorgesehene, linearbeweglich gelagerte Stellglied 103 ist vom grundsätzlichen Aufbau identisch mit dem Stellglied 3. Der Kolben 110 des Stellglieds 103 weist jedoch zusätzlich exemplarisch an einer der Mikrowellenpositionsmesseinrichtung 108 zugewandten Stirnfläche 180 einen Absorberring 182 auf. Ergänzend oder alternativ kann an einer dem Abschlussdeckel 106 zugewandten Stirnfläche 181 des Kolbens 110 ein Absorberring 183 angebracht sein. Vorzugsweise sind der Absorberring 182 und/oder der Absorberring 183 als magnetische Absorptionsmittel ausgebildet, die unmittelbar auf einer metallischen und damit elektrisch leitenden Oberfläche des Kolbens 110 aufgebracht sein können.

Der Absorberring 182 und/oder der Absorberring 183 sind hinsichtlich ihrer radialen Erstreckung derart ausgebildet, dass sie die Befestigungsmutter 169 bzw. die Kolbenstange 105 mit möglichst geringem radialem Abstand umfassen. Die Absorberringe 182 und 183 sind vorzugsweise jeweils kreisringförmig ausgebildet. Für die Gewährleistung einer magnetischen Absorberwirkung sind der Absorberring 182 und/oder der Absorberring 183 exemplarisch aus einer mit Ferritpartikeln gefüllten, aushärtbaren Kunststoffmasse gebildet. Vorzugsweise liegt die Kunststoffmasse in einem Ausgangszustand als gestaltlose, pastöse Masse vor, die insbesondere mit einem Tampondruckverfahren auf die jeweiligen Stirnseiten 180, 181 aufgebracht werden kann. Anschließend erfolgt eine Aushärtung der Kunststoffmasse, beispielsweise durch Energiezufuhr in Form von ultraviolettem Licht oder Wärme.

Der Absorberring 182 soll im Wesentlichen eventuell auftretende unerwünschte H11- und H21-Wellen dämpfen; der Absorberring 183 dient im Wesentlichen zur Dämpfung eines eventuell auftretenden unerwünschten TEM-Wellentyps.

In gleicher Weise kann ergänzend oder alternativ zu den Absorberringen 182 und/oder 183 auf dem Kunststoff-Einsatzteil 184, das bei der vorliegenden Ausführungsform die zweite Arbeitskammer 116 von einem Antennenraum 186 zumindest weitgehend hermetisch abtrennt, ein vorzugsweise elektrisch wirksamer Absorberring 185 aufgebracht sein. In dem Antennenraum 186 ist vorliegend ein napfförmig ausgebildeter, sich in Richtung des Stellglieds 103 erweiternder Antennenkörper 122 angeordnet, der gemäß der Darstellung der Figur 5 einen Y-förmigen Längsschnitt aufweist. Die mit der Ansteuerschaltung 128 elektrisch verbundene, drahtförmig ausgebildete Koppelsonde 125 ist mit dem Antennenkörper 122 kapazitiv gekoppelt. Die zur kapazitiven Kopplung erforderliche Beabstandung zwischen Koppelsonde 125 und Antennenkörper 122 wird durch einen exemplarisch rotationssymmetrisch ausgebildeten Kunststoff-Abstandhalter 187 gewährleistet. Der kreisrund ausgebildete Absorberring 185 kann beispielsweise in einem Siebdruckverfahren oder einem Tampondruckverfahren auf die Stirnfläche des Kunststoff-Einsatzteils 184 aufgebracht sein. Dabei wird beispielsweise eine elektrisch leitfähige Widerstandspaste auf das Kunststoff-Einsatzteil 184 aufgebracht und anschließend ausgehärtet.

An einer dem Kolben 110 zugewandten Stirnfläche 188 des Abschlussdeckels 106 ist exemplarisch ein vorzugsweise magnetisch wirksames Absorptionsmittel 197 angeordnet, das in gleicher Weise wie die Absorberringe 182 und 183 ausgebildet sein kann und das ebenso wie der Absorberring 183 eventuell auftretende unerwünschte TEM-Wellen dämpft.

Alternativ zu dem Absorberring 185 kann auf die Stirnfläche des Kunststoff-Einsatzteils 184 ein als Widerstands-Anordnung 189 ausgebildetes Absorptionsmittel angeordnet werden, das in der Figur 6 näher dargestellt ist. Beispielhaft umfasst die Widerstands-Anordnung 189 eine elektrisch isolierende, insbesondere einseitig selbstklebend beschichtete, ringförmig ausgebildete Trägerfolie 190, die an der Stirnfläche des Kunststoff-Einsatzteils 184 angebracht, insbesondere angeklebt werden kann. An einer dem Kolben 110 zugewandten Oberfläche der Trägerfolie 190 sind, vorzugsweise mit gleicher Winkelteilung bezogen auf die Bewegungsachse 104 in Umfangsrichtung verteilte, diskret ausgebildete elektrische Widerstände 191 angebracht. Die Widerstände 191 sind über Kontaktflächen 192 mittels Leiterbahnen 193 zu einer, vorzugsweise elektrisch geschlossenen, Ringstruktur verbunden, wie sie in der Figur 6 dargestellt ist.

Ergänzend oder alternativ kann eine derart ausgebildete Widerstands-Anordnung 189 auch auf der metallischen Oberfläche des Kolbens 110 angebracht werden, insbesondere auf der Stirnfläche 180. In diesem Fall muss der Widerstandsring um eine Viertel-Wellenlänge von der metallischen Oberfläche beabstandet sein. Dies kann vorzugsweise dadurch erreicht werden, dass die Dicke der Trägerfolie 190 derart bemessen ist, dass die von den Widerständen 191 zusammen mit den Leiterbahnen gebildeten Absorptionsmittel einen effektiv wirksamen Abstand von der elektrisch leitenden Oberfläche des Abschlussdeckels 106 aufweist, der in etwa 25 Prozent der von der Speise- und Auswerteschaltung 28 bereitgestellten Mikrowellenwellenlänge beträgt. Alternativ kann die Trägerfolie 190 auf einen nicht dargestellten Isolierring, der als Folienring ausgebildet sein kann, aufgebracht, insbesondere aufgeklebt sein, um die gewünschte Beabstandung von der elektrisch leitenden Oberfläche des Kolbens 110 zu gewährleisten.

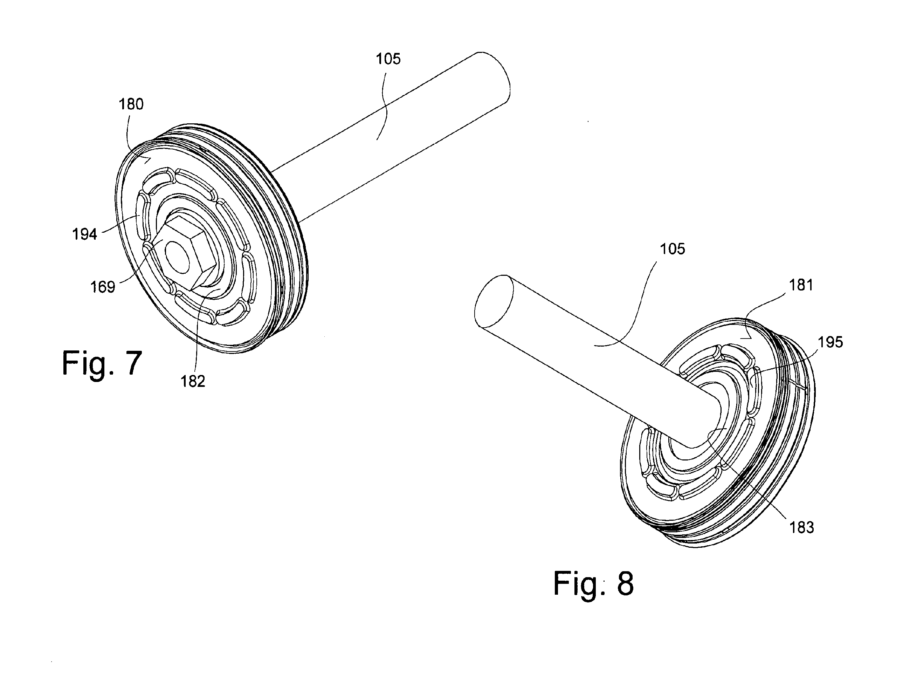

Die in den Figuren 7 und 8 dargestellten Stirnflächen 180 und 181 des Kolbens 110 sind exemplarisch beide mit Absorberringen 182 und 183 versehen, wobei je nach Anwendungsfall auch wenigstens einer der Absorberringe 182, 183 entfallen kann. Die Absorberringe 182 und 183 sind jeweils in einem radial innenliegenden Bereich des exemplarisch scheibenförmig ausgebildeten Kolbens 110 angeordnet. Aufgrund der Scheibenform des Kolbens 110 sind die beiden Absorberringe 182 und 183 jeweils in nicht näher dargestellten Ebenen angeordnet, deren Flächennormale parallel zur Bewegungsachse 104 ausgerichtet ist. Exemplarisch werden die beiden Absorberringe 182 und 183 jeweils von im Wesentlichen kreisringabschnittsförmig ausgebildeten und vorliegend kreisförmig angeordneten Abstandhaltern 194, 195 umgeben. Die Aufgabe der Abstandshalter 194, 195 besteht darin, die verschiedenen Absorptionsmittel 182, 183, 185 und 197 in den Endlagen des Stellglieds 103, in denen ein mechanischer Kontakt zwischen dem Kolben 110 und den jeweils gegenüberliegenden Stirnflächen des Abschlussdeckels 106 bzw. des Kunststoff-Einsatzteils 184 auftreten kann, zu schützen.

Die Aufgabe der jeweils optional vorhandenen Absorptionsmittel 70, 182, 183, 185, 197 und gegebenenfalls alternativ 189 besteht darin, die aufgrund von Beeinträchtigungen der mechanischen Symmetrien im Linearantrieb 1 bzw. 100 gegebenenfalls auftretenden, unerwünschten Mikrowellen zumindest teilweise zu absorbieren und dadurch eine hohe Qualität, insbesondere eine vorteilhafte Auflösung und Reproduzierbarkeit der Messung für die relative Position des Stellglieds 3, 103 im Antriebsgehäuse 2, 102 zu gewährleisten. Dabei kommt den in der zweiten Arbeitskammer 16, 116 angeordneten Absorptionsmitteln 70, 182, 185 jeweils die Aufgabe zu, die unmittelbar vom Antennenkörper 22, 122 abgestrahlten Mikrowellen bzw. die am Kolben 10, 110 oder an anderen Oberflächen der Arbeitskammer 16, 116 reflektierten Mikrowellen eines unerwünschten Wellentyps zu absorbieren. Dies kann wahlweise an jeder der genannten Positionen entweder mittels geeigneter magnetischer Absorptionsmittel und/oder mittels elektrisch wirksamer Absorptionsmittel erreicht werden.

Die in der ersten Arbeitskammer 115 exemplarisch vorgesehenen Absorptionsmittel 183 und 197 sind vorzugsweise für eine magnetische Absorption von unerwünschten Mikrowellen ausgebildet. Sie dienen dazu, eventuell zwischen Kolben 10, 100 und Antriebsgehäuse 2, 102 hindurch getretene unerwünschte Mikrowellen zu absorbieren und somit einen Wiedereintritt derartiger Mikrowellen in die zweite Arbeitskammer 116 zu verhindern. Bei ausreichendem Bauraum können ergänzend oder alternativ auch in der ersten Arbeitskammer elektrisch wirksame Absorptionsmittel vorgesehen werden, die jedoch bei Anbringung an metallischen Oberflächen die Abstandsbedingung bezüglich der Viertel-Wellenlänge erfüllen sollten.

Bei einer nicht dargestellten Ausführungsform der Erfindung sind die Absorptionsmittel als kleine Platten aus Ferritmaterial ausgebildet, die zu einem Kreisring angeordnet sind. Derartige Absorptionsmittel können ergänzend oder alternativ zu elektrisch wirksamen Absorptionsmitteln auf wenigstens einer der Stirnflächen des Kolbens 110 und/oder des Abschlussdeckels 106 und/oder des Kunststoff-Einsatzteils 184 angeordnet sein.

Die vorstehend angeführten Absorptionsmittel können als geschlossene Ringe oder als Anordnungen von Segmenten, insbesondere Ringsegmenten, ausgebildet sein. Die in den Figuren 9 bis 11 dargestellten Ausführungsformen von Absorptionsmitteln 210, 220, 230 sind jeweils von einer ersten Hüllkurve 211, 221, 231 umgeben und weisen im Inneren eine absorptionsmittelfreie Zone auf, die von der zweiten Hüllkurve 212, 222, 232 berandet wird. Bei den Absorptionsmitteln 210, 220, 230 kann es sich je nach Materialauswahl entweder um elektrisch oder um magnetisch wirksame Absorptionsmittel handeln, die dementsprechend entweder aus Widerstandspaste, aus SMD-Widerständen oder aus ferritischem Material hergestellt sind. Dabei ist die Gestaltung der einzelnen Segmente 213, 223, 224, 233, 234 der Absorptionsmittel 210, 220 230 nur exemplarisch zu verstehen. Dies gilt insbesondere für die bereichsweise in Umfangsrichtung überlappend angeordneten Segmente 223, 224, und 233, 234.

## Patentansprüche

1. Linearantrieb mit einem Antriebsgehäuse (2; 102) und einem im Antriebsgehäuse (2; 102) axialbeweglich längs einer Bewegungsachse (4; 104) aufgenommenen Stellglied (3; 103) sowie mit einer Mikrowellenpositionsmesseinrichtung (8; 108) zum Aussenden und Empfangen von Mikrowellen zur Bestimmung der Position des Stellglieds (3; 103) im Antriebsgehäuse (2; 102), die einen im Antriebsgehäuse (2; 102) angeordneten Antennenkörper (22; 122), eine Koppelsonde(25; 125) sowie eine Speise- und Auswerteschaltung (28; 128) umfasst und die zur Bereitstellung von Mikrowellen in einen vom Antriebsgehäuse (2; 102) und vom Stellglied (3; 103) begrenzten Hohlleiter (16; 116) sowie zur Detektion von am Stellglied (3; 103) reflektierten Mikrowellen ausgebildet ist, wobei an wenigstens einer Stirnfläche (180; 181) des Stellglieds (103) und/oder an wenigstens einer dem Stellglied (103) gegenüberliegenden Stirnfläche (188, 196), insbesondere des Antennenkörpers (22; 122) und/oder des Antriebsgehäuses, (2; 102) Absorptionsmittel (70; 182, 183, 185, 189, 197; 210; 220; 230) angebracht sind, die für eine elektrische und/oder eine magnetische Dämpfungswirkung für Mikrowellen, insbesondere zur Dämpfung von Mikrowellen des Typs H11 und/oder des Typs H21 und/oder des Typs TEM, ausgebildet sind und die zwischen zwei polygonförmigen Hüllkurven (211, 212; 221, 222; 231, 232) und/oder im Nutgrund einer nutförmigen Ausnehmung (67, 68) angeordnet sind.

2. Linearantrieb nach Anspruch 1, **dadurch gekennzeichnet, dass** die Absorptionsmittel (70; 182, 183, 197; 210; 220; 230) einen ferritischen Materialanteil enthalten, der für eine Dämpfung von magnetischen Anteilen der Mikrowellen, insbesondere von Oberflächenströmen, ausgebildet ist.

3. Linearantrieb nach Anspruch 1, **dadurch gekennzeichnet, dass** die Absorptionsmittel (185, 189; 210; 220; 230) elektrische Widerstandsmittel (191), insbesondere aus ausgehärteter Widerstandspaste, umfassen, die für eine Dämpfung elektrischer Feldstärkekomponenten unerwünschter Mikrowellen in einem Bewegungsraum für das Stellglied (3; 103) ausgebildet sind.

4. Linearantrieb nach Anspruch 3, **dadurch gekennzeichnet, dass** die Widerstandsmittel (189) als Anordnung von einzelnen oder elektrisch miteinander gekoppelten, diskreten elektrischen Widerständen (191) ausgebildet sind.

5. Linearantrieb nach einem der vorhergehenden Ansprüche, **dadurch gekennzeichnet, dass** die Absorptionsmittel (182, 183, 185, 189; 210; 220; 230) zwischen zwei ringförmigen Hüllkurven (211, 212; 221, 222), insbesondere zwischen zwei kreisringförmigen Hüllkurven, angeordnet sind.

6. Linearantrieb nach Anspruch 5, **dadurch gekennzeichnet, dass** die Absorptionsmittel (182, 183, 185, 189; 210; 220; 230) innerhalb der Hüllkurve segmentiert ausgebildet sind, so dass in Umfangsrichtung der Hüllkurve und/oder in radialer Richtung der Hüllkurve zwischen Bereichen, die mit Absorptionsmitteln versehen sind auch Bereiche frei von Absorptionsmitteln vorliegen.

7. Linearantrieb nach einem der vorhergehenden Ansprüche, **dadurch gekennzeichnet, dass** die Absorptionsmittel (182, 183, 185, 189) als, insbesondere geschlossener, Ring, vorzugsweise als Kreisring, insbesondere aus einer gestaltlosen Masse geformt, ausgebildet sind.

8. Linearantrieb nach einem der vorhergehenden Ansprüche, **dadurch gekennzeichnet, dass** die Absorptionsmittel (185, 189; 210; 220; 230) auf einer elektrisch isolierenden Oberfläche, insbesondere mit einer Beabstandung von in etwa 25 Prozent der von der Speise- und Auswerteschaltung (28; 128) bereitgestellten Mikrowellenwellenlänge von einer elektrisch leitenden Oberfläche (65; 180, 181, 188), angeordnet sind.

9. Linearantrieb nach einem der vorhergehenden Ansprüche, **dadurch gekennzeichnet, dass** die Absorptionsmittel (182, 183, 185, 189; 210; 220; 230) in einem radial innenliegenden Bereich des Stellglieds (3; 103), insbesondere benachbart zur Kolbenmutter (69; 169) oder Kolbenstange (5; 105), angeordnet sind.

10. Linearantrieb nach einem der vorhergehenden Ansprüche, **dadurch gekennzeichnet, dass** an dem Antennenkörper (22) an einer zweiten, dem Stellglied (3) gegenüberliegenden Stirnfläche (65) eine erste und eine zweite nutförmige Ausnehmung (67, 68) ausgebildet sind, die einen Winkel miteinander einschließen, insbesondere kreuzförmig zueinander angeordnet sind.

11. Linearantrieb nach Anspruch 10, **dadurch gekennzeichnet, dass** die erste nutförmige Ausnehmung (67), deren Nutflanken (71, 72) vorzugsweise quer zu den Seitenflächen (58, 59) des zweiten Speisehohlleiterabschnitts (60, 61) ausgerichtet sind, eine andere, insbesondere größere, Nuttiefe t2 als die zweite nutförmige Ausnehmung (68) aufweist.

12. Linearantrieb nach Anspruch 10 oder 11, **dadurch gekennzeichnet, dass** die Absorptionsmittel (70) im Nutgrund der ersten und/oder der zweiten nutförmigen Ausnehmung (67, 68), angeordnet sind.
